# EUROPEAN PATENT APPLICATION

(11) **EP 3 059 936 A1**
(43) Date of publication of application: **24.08.2016**
(21) Application number: 15155644.6
(22) Date of filing: 18.02.2015
(51) Int. Cl.: H04M 19/04, H04M 3/42

(54) **A system and method for providing data**

(71) Applicant: Echaezu, Dwight, London N15 3PY (GB)
(72) Inventor: Echeazu, Dwight, London, N15 3PY (GB); Ormiston, Christopher, Paisley, Renfreshire, Scotland PA3 4DA (GB)
(74) Representative: Miller Sturt Kenyon

(57) **Abstract**

A system and method for setting a parameter on a remote handheld device, the system and method including an information inventory 11 which contains the information 50 regarding the parameter to be set, such that the information 50 may be provided and the parameter set by a source subscriber 40 such that it is active on the remote handheld device of at least one target subscriber 41, with details of the at least one target subscriber 41 to which the information 50 is to be provided and information regarding the or each remote handheld device is used to match the information 50 with the at least one target subscriber 41, and the information 50 is delivered to and stored upon the remote handheld device, the information 50 being a ringtone 50 which is active during normal operation of the remote handheld device.

## Description

THE PRESENT INVENTION relates to a system and method for the provision of data, and in particular, a system and method for the efficient provision of data in a mobile or cellular environment.

Particularly, it is desirable to be able to provide ringtone data to mobile or cellular subscribers. It is also desirable to tailor the content of the ringtone data in dependence upon pre-set conditions, such that a particular, and preferably customised, ringtone is made available to a subscriber.

Additionally, it is desirable to be able to provide ringtone data both on an ad-hoc basis, and additionally on a more widespread basis. In both circumstances, ringtone data would be made available to a subscriber.

Previous attempts have been made to provide ringtone data available to mobile or cellular subscribers, but previous systems have been reliant on data networks and third-party infrastructure for operation.

The present invention seeks to provide a robust system and method in which tailored and/or targeted ringtone data may be transmitted to subscribers in a mobile or cellular environment.

According to a first aspect of the present invention, there is provided a system for setting a parameter (for example a ringtone) on a remote handheld device, the system being adapted to receive from a first user parameter information for the parameter or an identification of the parameter information for the parameter, identification information related to the remote handheld device and identification information related to the first user; and to cause the parameter information to be stored on the remote handheld device.

For example, the remote handheld device may be a mobile phone, the parameter may be a ringtone and the parameter information may be the specific sound of the ringtone (audio data). The system receives ringtone audio data or an identifier of it, and stores it on the mobile phone. Subsequently, when the first user calls the mobile phone, the stored ringtone is activated. Thus, the first user can set the ringtone that will sound when he calls the phone. Of course, the parameter may be something else, such as a notification alert, e-mail alert and so on.

According to one aspect of the present invention provides a system for setting a parameter on a remote handheld device, the system comprising an information inventory containing information regarding the parameter to be set, an information serving engine, a subscriber database, and a subscriber-parameter matching arrangement; wherein the subscriber database contains information about at least one target subscriber to which the information is to be provided, the subscriber-parameter matching arrangement takes the information regarding the parameter to be set and matches it with the at least one target subscriber, the information regarding the parameter to be set is delivered to the remote handheld device, the system is configured to store the information regarding the parameter to be set on the remote handheld device, the parameter to be set is an alert, which is active during normal operation of the operation of the remote handheld device.

Preferably, a source subscriber provides the information regarding the parameter to be set.

Conveniently, the source subscriber also provides the information about the or each target subscriber to which the information is to be provided.

Advantageously, the information about the or each target subscriber is a telephone number.

Preferably, the subscriber database further contains information regarding the operating system of the remote handheld device.

Conveniently, the information regarding the parameter to be set is delivered via the internet.

Advantageously, the alert is triggered by an incoming cellular call.

Preferably, the alert is triggered by an incoming SMS message.

Another aspect of the present invention provides a system for delivering information to a handheld device, the system comprising an information inventory containing information to be delivered, a subscriber database, and a subscriber-information matching module, wherein the subscriber database contains information about at least one target subscriber to which information is to be provided, and the subscriber-information matching module is configured to determine which information is to be provided to the or each target subscriber, based on information regarding the or each target subscriber stored in the subscriber database, the subscriber-information matching module takes the information to be delivered during a predetermined period and the or each selected target subscriber and matches them together, and the system is configured to delivered and store the information on the handheld device.

Preferably, the information contained in the information inventory is provided by an information provider.

Conveniently, the information provider also provides the information about the or each target subscriber to which the information is to be provided.

Advantageously, the information includes both information data and audio data.

Preferably, the information delivered to and stored on the handheld device is based upon location information collected from the handheld device.

Conveniently, the location information is collected from the handheld device and transmitted to the subscriber-information matching module.

Advantageously, the information delivered to and stored on the handheld device is configured to be displayed at a predetermined time.

The embodiments of the present invention will now be described, by way of example only, with reference to the figures, in which:
FIGURE 1 shows a schematic representation of a data providing system according to the present invention;
FIGURE 2 shows a schematic representation of a data providing system according to the present invention in combination with further infrastructure;
FIGURE 3 shows a schematic representation of a data providing system according to the present invention with yet further infrastructure attached; and
FIGURE 4 shows a schematic flow chart of an operation of an embodiment of the present invention.

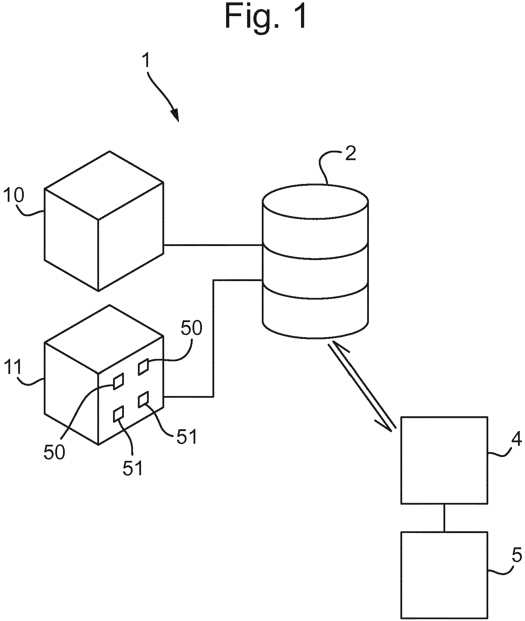

Turning firstly to Figure 1, a schematic representation of a system 1 according to the present invention is shown. The system 1 may include a server 2, a ringtone transmission log 4, an analysis engine 5, a subscriber database 10, and a ringtone database 11.

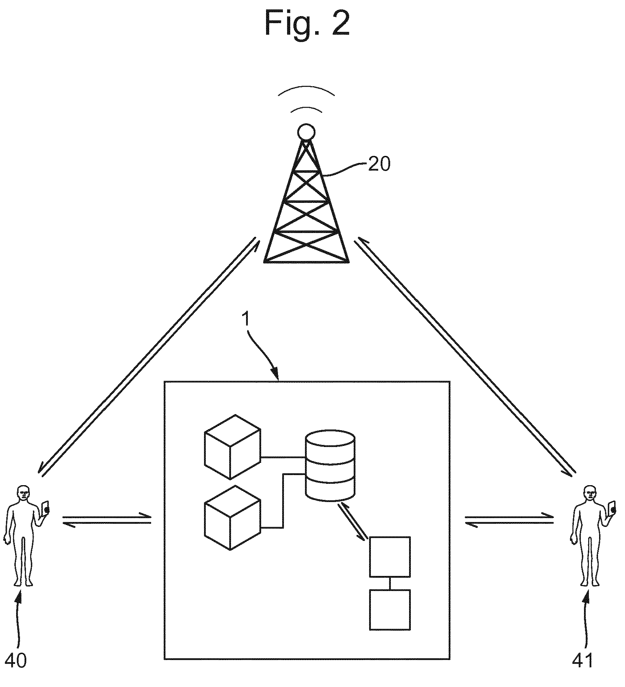

Figure 2 shows first and second subscribers 40, 41 connected to the system 1 and a telecoms operator 20. The subscribers 40, 41 may both be connected to the system 1, and also to one another via the telecoms operator 20.

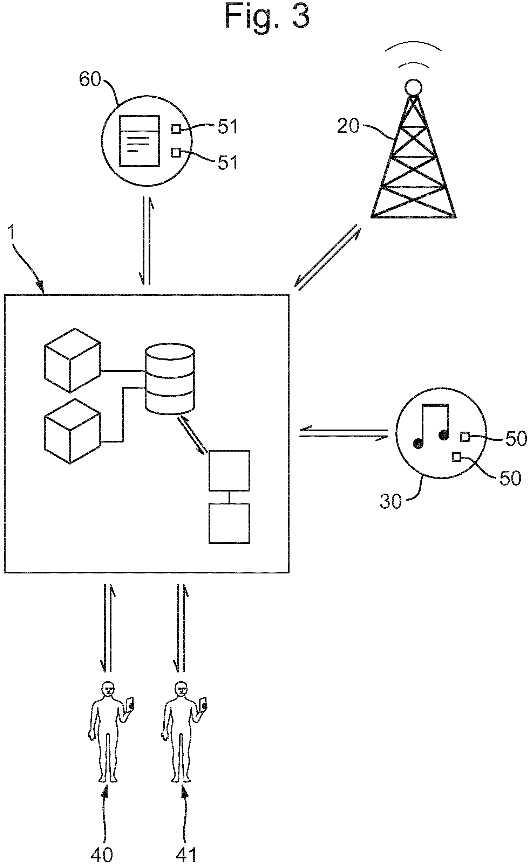

Figure 3 shows the system of Figure 1 connected to a telecoms operator 20, a ringtone data provider 30, and subscribers 40, 41. The system 1 may be connected to each of these 20, 30, 40, 41 by one- or two-way communication, and the telecoms operator 20 and the subscribers 40, 41 may also be connected outside of the system 1. In normal operating circumstances, the ringtone data provider 30 may not be connected directly to the telecoms operator 20 or the subscribers 40, 41, outside of the system 1.

A portion of the system 1 may be resident on a subscriber's 40, 41 handset or device. This portion of the system may be an application or similar, or may form part of the base operating system of the handset or device. This is discussed in more detail later.

The system 1 may be configured to allow a first subscriber 40 to transmit a ringtone 50 or the like to a second subscriber 41. The ringtone 50 may then be stored on the second subscriber's 41 handset or device such that the ringtone 50 is played when the first subscriber calls the second subscriber 41. No data connection is required for the ringtone 50 to be played on the second subscriber's 41 handset or device, because the ringtone 50 is both stored locally on the handset or device, and assigned in such a way that the core operating system of the device addresses the ringtone 50 in the same way as a standard ringtone.

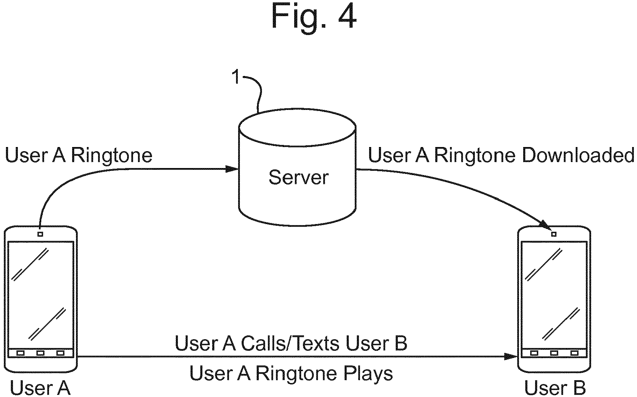

This is shown schematically in the flow diagram of Figure 4, which shows that user A device first sends a user ringtone A to a server 1 of the system, which then causes the user ringtone A to be uploaded and saved to/downloaded and saved by user B device. In other words, the server 1 is configured to store the information regarding the ringtone to be set on the user B device. When user A subsequently calls or text messages user B, user ringtone A plays instead of the usual alert.

The operation of the system 1 to enable the transmission and allocation of ringtones 50 is set out in more detail below.

The portion of the system 1 stored on the first subscriber's 40 handset or device may open a connection to the server 2, with the server 2 configured to accept a connection from the first subscriber's 40 handset or device. This may enable the first subscriber 40 to transmit a ringtone 50 to the server 2. This may take the form of a compressed audio file, such as an MPEG-2 Audio Layer III ('MP3') file, an MPEG-4 Audio Layer III ('MP4') file, an Ogg Vorbis file, or any suitable format, and may be transmitted to the server via a mobile or cellular network, or by a more traditional data network. The ringtone 50 may be accompanied by information or metadata or the like, as discussed later.

The server 2 may then store the ringtone 50, and may also catalogue the ringtone 50 and any associated information or metadata in the ringtone database 11, as discussed in more detail later.

When the ringtone 50 and any accompanying information has been transmitted to the server 2, the details of the second subscriber 41 may be retrieved from the subscriber database 10. The details of the second subscriber 41 may then be matched with the ringtone 50, and the server may provide a push notification to the handset or device of the second subscriber 41. The second subscriber 41 may then be given the option of accepting or declining the ringtone 50, and may also be given the option of previewing the ringtone 50 before accepting it.

After accepting the ringtone 50, the portion of the system 1 stored on the second subscriber's 41 handset or device may accept a connection from the server 2, and the server 2 would transmit the ringtone 50 to the handset or device. The ringtone 50 may be transmitted to the handset or device via a mobile or cellular network, or by a more traditional data network. Additionally, the server 2 may transcode the ringtone 50 into a different audio format, or may send the ringtone in the format in which it was sent to the server 2.

On completion of the transmission of the ringtone 50, the portion of the system 1 on the handset or device of the second subscriber 41 may provide an acknowledgement to the server 2 that transmission of the ringtone 50 was successful, and store and catalogue the ringtone 50 such that it is accessible by the core operating system of the handset or device.

The system 1 may also store details of the transmission of the ringtone 50 from the first subscriber 40 to the second subscriber 41 in the transmission log 4, and may also store further details of the first and second subscribers 40, 41 in the subscriber database 11.

Any metadata accompanying the ringtone 50 may also enable the core operating system of the handset or device to associate the ringtone 50 with a particular contact record, such that the ringtone 50 is played when the handset or device accepts an incoming call from the assigned contact record.

The assigned contact record may preferably be the contact record of the first subscriber 40, but may also be the contact record of another subscriber, a company, or an unrelated contact.

A connection to the server 2 is not required by the system 1 for the transmitted ringtone 50 to be played when the handset or device of the second subscriber 41 accepts an incoming call from the assigned contact record, because the ringtone 50 is assigned in such a way that the core operating system of the handset or device addresses the ringtone in the same way as a standard ringtone. Therefore, this enables the ringtone 50 to be played on the device or handset when the device or handset has no data connection, via a mobile or cellular network, traditional data network, or otherwise.

The ringtone 50 may also be set as a message tone to be played when the handset or device receives an SMS, MMS or similar message from the assigned contact. The process of assigning the ringtone 50 to be played when the handset or device receives an SMS, MMS, or similar message is the same as for assigning the ringtone 50 to an incoming call.

Additionally, it is envisaged that the ringtone 50 may be set as a message or alert tone when the handset or device receives an e-mail, an application notification (which may be, for instance, a Facebook^{®}, Twitter^{®} notification or the like), or any other notification from the assigned contact. The ringtone 50 may then be played when an e-mail or notification is received from the assigned contact.

Alternatively, the first subscriber 40 may desire to send a pre-recorded ringtone 50 to the second subscriber 41, which may be a song, recorded piece of music, a sample of a sound or noise, or any other suitable sound clip. The first subscriber 40 may use the portion of the system 1 on the handset or device to browse a catalogue of ringtones 50 in the ringtone database 11. The ringtones 50 may be supplied by the ringtone data provider 30, or alternatively may be loaded into the ringtone database 11 from another source.

To browse the ringtone database 11, the portion of the system 1 on the handset or device may provide the first subscriber 41 with an interface to allow search and browsing of ringtones 50, with the selected ringtone 50 being selectable. If the ringtone 50 is selected from the ringtone database 11, but stored by the ringtone provider 30, the ringtone 50 may be transmitted from the ringtone data provider 30 to the ringtone database 11, and then to the server 2.

The ringtone database 11 may be configured to accept a connection from the ringtone data provider 30, such that the ringtone provider 30 may load a ringtone 50 to the ringtone database 11. This may take the form of a compressed audio file, such as an MPEG-2 Audio Layer III ('MP3') file, an MPEG-4 Audio Layer III ('MP4') file, an Ogg Vorbis file, or any suitable format, and may be transmitted to the server by a traditional data network, or indeed via a mobile or cellular network, or by any other suitable network.

The ringtone 50, once stored in the ringtone database 11, may then be transferred to the server 2, ready for transmission.

In a similar way to that which is discussed above, when the ringtone 50 and any accompanying information has been transferred to the server 2, the server 2 may provide a push notification to the handset or device of the second subscriber 41. The second subscriber 41 would then be given the option of accepting or declining the ringtone 50, and may also be given the option of previewing the ringtone 50 before accepting it.

The remaining steps to transmit the ringtone 50 and deploy it on the handset or device of the second subscriber 41 may be substantially the same as those set out above.

It is envisaged that the system 1 may be operable to transmit a picture as well as or instead of text that may be displayed when the ringtone 50 is played, so that a subscriber 40, 41 may know who is calling at-a-glance if their handset or device is set to 'silent' mode or similar.

Additionally, it is envisaged that the system 1 described herein may be operable to transmit and set a video as well as or instead of a ringtone 50, or indeed as a video ringtone. The video ringtone may be configured such that when the handset or device receives an incoming call, alert, notification, or the like, the video ringtone may be played in a loop or otherwise repeated.

The video ringtone may also be provided with audio, or may alternatively play a ringtone 50 at the same time as displaying the video. It is to be understood that the video and/or video ringtone may take the place of an image and/or text to be displayed when the ringtone 50 is played.

Video ringtones may be of interest for handsets or devices which are operable to make and receive video calls.

Returning to a discussion of the system 1 shown in Figure 2, the system 1 may also be operable to transmit targeted ringtones 51 to subscribers 40, 41. The targeted ringtone 51 may include both a ringtone 50, along with accompanying data, along with an information message 52. The targeted ringtone 51 may also be accompanied any other type of information. The form and content of the targeted ringtone 51 will be discussed in more detail later.

It is envisaged that targeted ringtones 51 may be sent to a considerable number of subscribers 40, 41, to make the subscribers 40, 41 aware of particular information, or of particular promotions that may be of interest. Additionally, the targeted ringtones 51 may be provided to subscribers 40, 41, based on their location, and the portion of the system 1 on the handset or device of the subscribers 40, 41 may access the GPS data or other location information provided by the handset or device and provide information regarding the location of the subscribers 40, 41. This will be discussed in more detail later.

Additionally, the system 1 may also be operable to direct particular targeted ringtones 51 to particular subscribers 40, 41, dependent upon pre-set conditions, for example at a particular time of day. The way in which this targeted ringtone 51 direction operates will be discussed briefly here and in more detail below.

The ringtone database 11 may also be pre-loaded with targeted ringtones 51 to be provided to subscribers 40, 41, or targeted ringtones may be transmitted to the ringtone database 11 from the ringtone provider 30. Additionally, the ringtone database 11 may be loaded with targeted ringtones 51 on an ad-hoc basis.

Alternatively, the targeted ringtones 51 may be provided by an information provider 60 (shown in Figure 3), or by subscribers 40, 41. The ringtone provider 30 and/or the information provider 60 may load the ringtone database 11 using a ringtone loading system, which may take the form of a web portal or similar. The ringtone provider 30 and/or the information provider 60 may also provide further details, possibly in the form of text, image, and/or video data, which may be transmitted along with or instead of the targeted ringtones 51.

If subscribers 40, 41 provide the targeted ringtones 51, this may be carried out using the portion of the system 1 stored on the device or handset of the subscriber 40, 41. The targeted ringtones 51 may be transmitted to the ringtone database 11 in a similar way to that discussed above, for the transmission of ringtones 50 from a first subscriber 40 to a second subscriber 41.

Provision of targeted ringtones 51 may require the provider, which may be the ringtone provider 30, the information provider 60, a subscriber or subscribers 40, 41 and/or indeed another party, to provide verification of identity or the like before targeted ringtones 51 may be provided. This may reduce the likelihood of targeted ringtones 51 being provided that are unsuitable, inappropriate, fraudulent, or the like.

The targeted ringtones 51 may be catalogued for ease of reference and location. The subscriber database 10 may include details of each subscriber 40, 41 on a cellular or mobile network, or only the details of subscribers who are subscribers of the system 1.

The targeted ringtones 51 may then be matched to subscribers 40, 41 by way of a subscriber-information matching module, and readied for transmission from the system 1 to the subscribers 40, 41. The way in which the targeted ringtones 51 are transmitted to the subscribers 40, 41 is substantially similar to the way in which ringtones 50 are transmitted, as discussed above.

As discussed above, in some embodiments of the invention, the targeted ringtone 51 may be set to play when the subscriber 40, 41 is in a particular location, with their location data obtained from the GPS portion of their handset or device as set out above. The particular location could, by way of example, be in the vicinity of a restaurant, bar, or similar, and the targeted ringtone 51 may be used to alert the subscriber 40, 41 to the existence of the restaurant, bar, or similar. Alternatively or additionally, the targeted ringtone 51 may also be used to alert the subscriber 40, 41 of an offer or deal available at the restaurant, bar, or similar, or indeed could alert the subscriber 40, 41 of public service information, safety information, traffic information, or any other suitable type of information.

Further, the targeted ringtone 51 may be used to provide music samples, greetings, or the like, and such targeted ringtones 51 may not necessarily be location- or time-dependent, but may be transmitted to subscribers 40, 41 on an ad-hoc basis.

Additionally, in some embodiments of the invention, the targeted ringtone 51 may be set to play at a particular instance, for instance at a particular time of day.

The location-based and/or instance-based playback of targeted ringtones 51 may occur regardless of whether the subscriber 40, 41 has 'accepted' the tone as detailed above, or indeed regardless of the current state of operation of the subscriber's 40, 41 handset or device, particularly if the subscriber 40, 41 has accepted a setting or option which will allow this to occur for the organisation sending the targeted ringtone or ringtones 51.

The portion of the system 1 on the handset or device may keep data which includes a track of each targeted ringtone 51 that the subscriber 40, 41 has accepted or listened to, and may log whether the subscriber 40, 41 has acted upon, played, forwarded, or otherwise interacted with the targeted ringtone 51 or accompanying information. The log data may then be transmitted to the ringtone transmission log 4 for later use and/or analysis, as set out below.

The data from the ringtone transmission 4 log may then be processed by the analysis engine 5. The processing steps undertaken by the analysis engine 5 may include analysis as to whether a subscriber or subscribers 40, 41 like a particular targeted ringtone 51, and/or behavioural patterns of subscribers 40, 41 dependent upon the targeted ringtones 51 provided thereto. Further, analysis may be undertaken regarding which targeted ringtone or ringtones 51 is/are particularly relevant to a particular group or groups of subscribers 40, 41.

The information database 11 may, in combination with the subscriber database 10 and the analysis engine 5, store and keep updated information regarding which targeted ringtones 51 have been provided to certain subscribers 40, 41, a log of which subscriber or subscribers 40, 41 have played a particular targeted ringtone 51, a database of the targeted ringtones 51 available, and may be operable to undertake reporting on such information (and further information, if required).

The telecoms operator 20 or ringtone provider 30, the owner of the system 1 (or any other interested party) may undertake reporting on the system 1. The reports may include information regarding the number of ringtones 50 and/or targeted ringtones 51 provided, the number of ringtones 50 or targeted ringtones 51 which have been played by a subscriber or subscribers 40, 41, the content of the ringtones 50 and/or targeted ringtones 51 which have been played, the number of times that the ringtones 50 and/or targeted ringtones 51 have been played, the identification number or numbers of a particular subscriber 40, 41, and whether a particular subscriber is presently accepting ringtones 50 and/or targeted ringtones 51, if so, who from, and for how long they have been accepting ringtones and/or targeted ringtones 51.

Further, reports may be generated regarding particular ringtones 50 and/or targeted ringtones 51. The report may include the name of the ringtone 50, the content of the targeted ringtone 51, any information associated with a ringtone 50 or targeted ringtone 51, the number of times the information has been viewed, the number of times the ringtone 50 or targeted ringtone 51 has been replayed, the number of times that the ringtone, targeted ringtone 51 and/or any associated information has been shared or similar, the identities of subscribers 40, 41 who have viewed the associated information and/or listened to the ringtone 50 or targeted ringtone 51, and other relevant information.

It is to be understood that other reports may be generated which may include information available in the system 1. Reports may take any suitable format, and may be provided in any appropriate way.

Additionally, it is envisaged that the system 1 may allow for the provision of targeted information which may not include a targeted ringtone 51, but may include information in the form of text, an image, a combination thereof, or any other suitable type of information.

The system 1 may be operable to provide a video or video data as well as or instead of a targeted ringtone 51, or indeed as a targeted video ringtone. A targeted video ringtone may be provided with audio, or may alternatively play a targeted ringtone 51 at the same time as displaying the video.

It is to be understood that the video and/or targeted video ringtone may take the place of an image and/or text to be displayed when the targeted ringtone 51 is played. Further, the video and/or targeted video ringtone may be played in a loop or otherwise repeated.

Returning to a more general discussion of the system 1, as stated earlier, the portion of the system 1 which is stored on a subscriber's 40, 41 handset or device may take the form of an application which may be installed, or indeed may form part of the base operating system of the handset or device.

In preferred embodiments of the present invention, the portion of the system stored on the handset or device is an application.

For a subscriber 40, 41 to use the system 1, the subscriber 40, 41 may have to download the application to their handset or device. The subscriber 40, 41 may be presented with terms and conditions that may have to be accepted in order to commence use of the system 1. Ringtones 50 and/or targeted ringtones 51 may not be provided to a subscriber 40, 41 if they have not accepted the terms and conditions.

The application for a handset or device may be made available online for download, and given that the present system 1 preferably includes an Android^{®} application, it may be delivered by way of an Android Package (or APK) file, either via the Google^{®} Play Store^{®}, the Amazon^{®} Apps and Games Store^{®}, or from a download area independent of Google^{®} or Amazon^{®}. Of course, it is envisaged that other platforms may be supported, such as iOS^{®} and/or Microsoft Windows^{®}.

Subscribers 40, 41 may join the system 1 in a variety of ways - via an internet portal, by downloading, installing and running the application as detailed above, or the application may come pre-loaded on a handset or device supplied by a telecoms operator 20, and subscribers may therefore be automatically enrolled in the system 1. A subscriber 40, 41 (or indeed somebody acting on the behalf of a subscriber 40, 41, for instance a telecoms operator 20) may be required to provide at least some information regarding the subscriber 40, 41 when joining the system 1.

The system 1 may include a further application which may be configured for the provision of targeted ringtones 51. This further application may also be suitable for installation onto a handset or device, as described above, or may indeed be an application for Windows^{®}, Mac OS^{®}, Linux, or the like. Alternatively, the further application may be a web-based application or internet portal.

Targeted ringtones 51 which are provided by the system may not necessarily be provided to a subscriber's 40, 41 handset or device at the time that the targeted ringtone 51 is to be played. Instead, the targeted ringtones 51 may be aggregated, and queued for delivery to a subscriber or subscribers 40, 41. Therefore, the targeted ringtones 51 may be transmitted at times of low network usage, for instance during the early hours of the morning, to reduce the load on a cellular network.

In use, the system 1 would enable a first subscriber 40 to send a ringtone 50 to a second subscriber 41, such that the ringtone 50 would play when the first subscriber 40 initiates a call, using their device or handset, to the second subscriber's 41 device or handset.

The first and second subscribers 40, 41 would both have the application associated with the service installed on their respective handset or device. The first subscriber 40 could, by way of an example, record a sample of their voice, using the microphone present on their handset or device, and save it, using the application. The sample would then be converted into a ringtone, and transmitted to the server 2, using the application. The ringtone would be accompanied by information to identify the first subscriber, the second subscriber, and potentially the content of the ringtone.

The server 2 would then send a push notification to the handset or device of the second subscriber 41, indicating that a ringtone 50 is ready to download from the first subscriber 40. The second subscriber 41 would be given the option of previewing the ringtone 50, and accepting or rejecting the ringtone 50. If the second subscriber 41 accepts the ringtone 50, it would be associated with the contact information for the first subscriber 40 on the handset or device of the second subscriber 41. The ringtone 50 would also be downloaded onto the handset or device of the second subscriber 41, and would be set to play when an incoming call and/or SMS message is forthcoming from the first subscriber 40.

The ringtone 50 would play on an incoming call from the first subscriber even in the absence of a data connection, cellular or otherwise, because the ringtone 50 is stored on the handset or device of the second subscriber 41. Therefore, even in a situation where no data connection is available, and, for instance, to obtain signal, the device or handset of the second subscriber 41 is in a location which is difficult to reach, they would know that the first subscriber 40 is attempting to contact them. This may be useful in situations where, for instance, the second subscriber 41 is an emergency contact or similar for the first subscriber 40.

By way of an additional example, the system 1 may be used by an employer to transmit a ringtone 50 to the handset or device of an employee who may be a subscriber 40, 41. The ringtone 50 may be used to alert the subscriber 40, 41 quickly and easily that their employer is calling, and that the call may be urgent.

Additionally, if the first or second subscriber's 40, 41 handset or device is accepting targeted ringtones 51, their handset or device may play a targeted ringtone 51 at a pre-set time. This targeted ringtone 51 may be a reminder of an important event, a notification providing important information, or an alert that a particular shop or restaurant or the like is offering a particular deal.

If the first or second subscriber 40, 41 is, for instance, out shopping, the system 1 may obtain the subscriber's 40, 41 location by GPS or otherwise, and may trigger the playback of a targeted ringtone 51 which alerts the subscriber 40, 41 to a particular offer or similar at a shop, restaurant or similar which may be near them at the time. This may be used to alert the first or second subscriber 40, 41, for instance, of a time-limited deal.

Alternatively, the system 1 may be triggered to provide a targeted ringtone 51 to the device or handset of the subscriber 40, 41 to alert them that their pre-booked table at a bar or restaurant is ready.

In other situations, a band, musician, or any other type of artist may wish to provide a sample of a track, their work, or the like, so the system 1 may be configured to provide a targeted ringtone 51 to the device or handset of a subscriber 40, 41 which includes a recording or sample of the track or work.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Thus, the foregoing embodiments of the invention have been described by way of example only. It will be appreciated by a person skilled in the art that various modifications can be made without departing from the scope of the invention as defined by the claims. For example, the specification refers to a first subscriber 40 and a second subscriber 41, but it is to be understood that these may be reversed, with the second subscriber 41 sending the first subscriber 40 a ringtone 50.

## Claims

1. A system for setting a parameter on a remote handheld device, the system comprising:
an information inventory containing information regarding the parameter to be set, an information serving engine, a subscriber database, and a subscriber-parameter matching arrangement; wherein:
the subscriber database contains information about at least one target subscriber to which the information is to be provided;
the subscriber-parameter matching arrangement takes the information regarding the parameter to be set and matches it with the at least one target subscriber;
the information regarding the parameter to be set is delivered to the remote handheld device;
the system is configured to store the information regarding the parameter to be set on the remote handheld device; and
the parameter to be set is an alert, which is active during normal operation of the operation of the remote handheld device.

2. The system of claim 1, wherein a source subscriber provides the information regarding the parameter to be set.

3. The system of claim 2, wherein the source subscriber also provides the information about the or each target subscriber to which the information is to be provided.

4. The system of any preceding claim, wherein the information about the or each target subscriber is a telephone number.

5. The system of any preceding claim, wherein the subscriber database further contains information regarding the operating system of the remote handheld device.

6. The system of any previous claim, wherein the information regarding the parameter to be set is delivered via the internet.

7. The system of any previous claim, wherein the alert is triggered by an incoming cellular call.

8. The system of claims 1-7, wherein the alert is triggered by an incoming SMS message.

9. A system for delivering information to a handheld device, the system comprising:
an information inventory containing information to be delivered, a subscriber database, and a subscriber-information matching module, wherein:
the subscriber database contains information about at least one target subscriber to which information is to be provided, and the subscriber-information matching module is configured to determine which information is to be provided to the or each target subscriber, based on information regarding the or each target subscriber stored in the subscriber database;
the subscriber-information matching module takes the information to be delivered during a predetermined period and the or each selected target subscriber and matches them together; and
the system is configured to delivered and store the information on the handheld device.

10. The system of claim 9, wherein the information contained in the information inventory is provided by an information provider.

11. The system of claim 10, wherein the information provider also provides the information about the or each target subscriber to which the information is to be provided.

12. The system of claims 9-11, wherein the information includes both information data and audio data.

13. The system of claims 9-12, wherein the information delivered to and stored on the handheld device is based upon location information collected from the handheld device.

14. The system of claim 13, wherein the location information is collected from the handheld device and transmitted to the subscriber-information matching module.

15. The system of claim 9-14 wherein the information delivered to and stored on the handheld device is configured to be displayed at a predetermined time.
